# EUROPÄISCHE PATENTSCHRIFT

(11) **EP 2 607 943 B1**
(45) Veröffentlichungstag und Bekanntmachung des Hinweises auf die Patenterteilung: **21.05.2014**
(21) Anmeldenummer: 12192610.9
(22) Anmeldetag: 14.11.2012
(51) Int. Cl.: G02C 1/04, G02C 1/08, G02C 5/02

(54) **Brille**
Spectacles
Lunettes

(30) Priorität: 19.12.2011 DE 102011089034
(43) Veröffentlichungstag der Anmeldung: 26.06.2013
(73) Patentinhaber: ALPINA SPORTS GmbH, 86316 Friedberg (DE)
(72) Erfinder: Zipfel, Robert, 86153 Augsburg (DE); Gehring, Martin, 86655 Harburg (DE)
(74) Vertreter: Rau, Schneck & Hübner Patentanwälte Rechtsanwälte PartGmbB

(56) Entgegenhaltungen:
- EP-A1- 1 577 698
- WO-A1-95/13558
- DE-C1- 4 118 018
- FR-A1- 2 535 473
- US-A- 4 799 781
- US-A- 5 703 669

## Beschreibung

Die Erfindung betrifft eine Brille, insbesondere eine Brille mit einer auswechselbaren Scheibe.

Es kann wünschenswert sein, bei einer Brille die Scheibe auswechselbar zu gestalten. Brillen mit auswechselbaren Scheiben sind beispielsweise aus der WO 2010/003143 A1 und der FR 2 535 473 A1 bekannt.

Es besteht fortwährend Bedarf, den Mechanismus zum Wechseln der Scheibe zu vereinfachen und zu verbessern.

Eine Aufgabe der Erfindung besteht darin, den Mechanismus zum Auswechseln der Scheibe einer Brille zu verbessern.

Diese Aufgabe wird durch die Merkmale des Anspruchs 1 gelöst. Der Kern der Erfindung besteht darin, den Rahmen einer Brille derart auszubilden, dass zwei Rahmenteile in einem Mittenbereich miteinander verbunden sind, wobei das untere Rahmenteil zum Auswechseln der Scheiben der Brille relativ zum oberen Rahmenteil aus einer eingeschobenen Endposition in eine ausgezogene Endposition verschiebbar ist. Die Verschiebung erfolgt insbesondere linear. Das untere Rahmenteil ist insbesondere in Longitudinalrichtung verschiebbar. Hierbei und im Folgenden entsprechen die Richtungsangaben den üblichen anatomischen Lage- und Richtungsbezeichnungen bezüglich der bestimmungsgemäß aufgesetzten Brille. Die Brillenscheibe ist in diesem Fall im Wesentlichen parallel zu einer Frontalebene angeordnet. Die Brille ist symmetrisch zu einer Sagitalebene ausgebildet. Die Longitudinalrichtung ist durch die Schnittgerade der Sagitalebene mit der Frontalebene definiert. Sie ist somit parallel zur Körperlängsachse und senkrecht zu einer Transversalebene. Die Begriffe oben und unten sind relativ zur Transversalebene zu verstehen.

Durch die Verschiebbarkeit des unteren Rahmenteils relativ zum oberen Rahmenteil ist die Scheibe der Brille im Rahmen fixierbar und entriegelbar. Das untere Rahmenteil bildet in der eingeschobenen Endposition ein Mittel zur Fixierung der Scheibe im Rahmen. Bei der eingeschobenen Endposition handelt es sich somit um eine Verriegelungs- oder Fixierungsposition. In der ausgezogenen Endposition des unteren Rahmenteils ist die Scheibe aus dem Rahmen entnehmbar.

Zur Sicherung des unteren Rahmenteils in der eingeschobenen Endposition sind magnetische Sicherungsmittel vorgesehen. Hierbei ist mindestens ein mit dem unteren Rahmenteil verbundenes ferromagnetisches Sicherungsmittel vorgesehen, welches mit mindestens einem mit dem oberen Rahmenteil verbundenen ferromagnetischen Sicherungsmittel zusammenwirkt. Bei den Sicherungsmitteln kann es sich um zwei Magneten handeln. Es ist auch möglich, lediglich eines der Sicherungsmittel als Permanentmagnet auszubilden, während das andere aus einem ferromagnetischen, magnetisierbaren Material ist. Die magnetischen Sicherungsmittel erlauben eine einfache Bedienung des Sicherungs- und Wechselmechanismus, ohne den Rahmen zu schwächen. Mittels Magneten kann auf besonders platzsparende Weise eine hohe Haltekraft erreicht werden.

Weiterhin kann vorgesehen sein, zur Sicherung des unteren Rahmenteils in der ausgezogenen Endposition mindestens ein mit dem unteren Rahmenteil verbundenes ferromagnetisches Sicherungsmittel vorzusehen, welches mit mindestens einem mit dem oberen Rahmenteil verbundenen ferromagnetischen Sicherungsmittel zusammenwirkt. Die Sicherungsmittel zur Sicherung des unteren Rahmenteils in der ausgezogenen Endposition können denen zur Sicherung des unteren Rahmenteils in der eingeschobenen Endposition entsprechen.

Die Sicherungsmittel sind vorteilhafterweise jeweils in die Rahmenteile integriert. Sie sind insbesondere formschlüssig in Aussparungen in den Rahmenteilen integriert. Sie können beispielsweise zylindrisch ausgebildet sein und in Bohrungen, insbesondere sacklochartigen Bohrungen, in den Rahmenteilen angeordnet sein. Sie können vorteihafterweise mit dem jeweiligen Rahmenteil verklebt sein. Dies ermöglicht eine besonders sichere Anordnung der Sicherungsmittel in den Rahmenteilen.

In einer vorteilhaften Ausführungsform sind zwei ferromagnetische Sicherungsmittel im unteren Rahmenteil integriert. Diese sind insbesondere in Longitudinalrichtung gegeneinander versetzt angeordnet. Sie können jeweils mit einem einzigen Sicherungsmittel im oberen Rahmenteil zusammenwirken. Hierbei kann es vorteilhaft sein, ausschließlich das Sicherungsmittel im oberen Rahmenteil magnetisch auszubilden, während die Sicherungsmittel im unteren Rahmenteil aus einem magnetisierbaren Material sein können.

Weiterhin kann das untere Rahmenteil mittels eines mechanischen Sicherungs-Elements gesichert mit dem oberen Rahmenteil verbunden sein. Das mechanische Sicherungs-Element bildet insbesondere eine zusätzliche mechanische Sperre, welche ein unbeabsichtigtes Lösen des unteren Rahmenteils vom oberen Rahmenteil verhindert. Das mechanische Sicherungselement kann hierbei, beispielsweise zum Auswechseln des unteren Rahmenteils, lösbar sein. Es ist auch möglich, das untere Rahmenteil unlösbar mit dem oberen Rahmenteil zu verbinden. Dies kann eine besonders robuste Ausbildungsform der Brille ermöglichen.

Das untere Rahmenteil kann insbesondere als Mittelsteg der Brille ausgebildet sein. Es ist in diesem Fall insbesondere möglich, dass das untere Rahmenteil die mindestens eine Scheibe jeweils lediglich in einem Mittenbereich umgreift, d. h. an der Scheibe anliegt. Der Rahmen umgreift in diesem Fall auch in der eingeschobenen Endposition des unteren Rahmenteils die mindestens eine Scheibe lediglich teilweise. Er liegt umfangsseitig insbesondere in einem Bereich von 40 % bis 100 %, insbesondere in einem Bereich von 45 % bis 80 %, insbesondere in einem Bereich von 50 % bis 70 % am Umfang der mindestens einen Scheibe an. Anders ausgedrückt liegt das untere Rahmenteil auch in der eingeschobenen Endposition über eine Länge von höchstens 10 cm, insbesondere höchstens 7 cm, insbesondere höchstens 4 cm an der Scheibe an.

Es kann jedoch auch vorteilhaft sein, die Brille mit einem Vollrahmen, d. h. einem Rahmen, welcher die Scheibe oder die Scheiben der Brille vollständig umrandet, auszubilden. In diesem Fall können die Rahmenteile in einem Seitenbereich der Brille fest miteinander verbunden sein. Sie sind im Seitenbereich vorzugsweise lösbar miteinander verbunden. Hierfür kann eine mechanische und/oder magnetische Verbindung vorgesehen sein.

Durch eine zumindest abschnittsweise flexible Ausbildung des oberen Rahmenteils wird das Wechseln der Scheibe vereinfacht.

In den Rahmenteilen können Führungsausnehmungen zur Aufnahme eines Randbereichs der Scheibe bzw. der Scheiben vorgesehen sein. Eine nutartige Ausbildung derselben, in welche die Scheibe, insbesondere formschlüssig, einsetzbar ist, verbessert hierbei den Halt der Scheibe im Rahmen.

Für eine weitere Verbesserung des Halts der Scheibe im Rahmen können im Randbereich der Scheibe Rastnasen vorgesehen sein, welche mit dazu passenden Hinterschneidungen, insbesondere im oberen Rahmenteil zusammenwirken. Die Rastnase und die dazu passenden Hinterschneidungen sind insbesondere im medialen Bereich der Brille angeordnet.

Außerdem können in der Scheibe Einkerbungen vorgesehen sein, welche mit dazu passenden Vorsprüngen am Rahmen zusammenwirken. Auch hierdurch kann eine Fixierung der Scheibe im Rahmen verbessert werden. Die Einkerbungen und Vorsprünge sind insbesondere in einem lateralen Bereich der Brille vorgesehen.

Eine Ausbildung der Brille aus Kunststoff ermöglicht einerseits eine einfache Herstellung, andererseits eine besonders robuste Konstruktion der Brille und ermöglicht es schließlich, die Brille sehr leicht auszubilden.

Weitere Vorteile, Details und Einzelheiten der Brille ergeben sich aus der Beschreibung eines Ausführungsbeispiels anhand der Zeichnungen. Es zeigen:
- Fig. 1: eine schematische Ansicht des Rahmens der Brille von vorne mit dem unteren Rahmenteil in der eingeschobenen Endposition,
- Fig. 2: eine Ansicht gemäß Fig. 1 mit dem unteren Rahmenteil in ausgezogener Endposition,
- Fig. 3 und Fig. 4: Schnittdarstellungen der Brille entlang der Linie III-III zur Verdeutlichung der Anordnung und Funktionsweise der Sicherungsmittel,
- Fig. 5: eine Ansicht der Brille von der Seite,
- Fig. 6: eine weitere Ausführungsform der Brille mit einem Vollrahmen, wobei der Unterrahmen abnehmbar ist, und

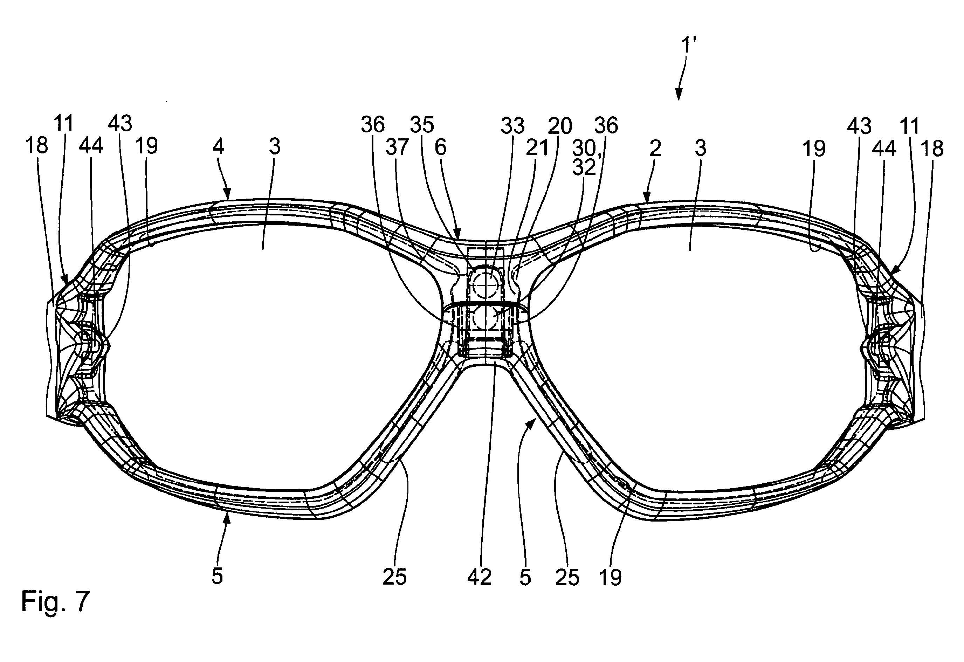

- Fig. 7: eine weitere Ausführungsform der Brille mit Vollrahmen, wobei der Unterrahmen im Seitenbereich fix mit dem Oberrahmen verbunden ist.

Eine Brille 1 umfasst einen Rahmen 2, in welchem zwei Scheiben 3 auswechselbar angeordnet sind. Die Scheiben 3 sind in den Figuren jeweils gestrichelt dargestellt. Bei der Brille 1 handelt es sich insbesondere um eine Sportbrille oder um eine Sonnenbrille. Der Rahmen 2 ist vorteilhafterweise aus Kunststoff. Auch die Scheiben 3 können aus Kunststoff sein. Sie können auch aus Glas sein. Die Scheiben 3 können auch zusammenhängend ausgebildet sein. Allgemein umfasst die Brille 1 mindestens eine Scheibe 3.

Der Rahmen 2 umfasst ein erstes Rahmenteil 4 und ein zweites Rahmenteil 5. Er ist insbesondere zweiteilig ausgebildet. Bei dem ersten Rahmenteil 4 handelt es sich insbesondere um ein oberes Rahmenteil. Bei dem zweiten Rahmenteil 5 handelt es sich insbesondere um ein unteres Rahmenteil. Am ersten Rahmenteil 4 sind zwei Brillenbügel 18 befestigt. Die Brillenbügel 18 können am ersten Rahmenteil 4 angelenkt sein. Anstelle der Brillenbügel 18 kann auch ein elastisches Band vorgesehen sein. Die Rahmenteile 4, 5 sind in einem auch als Mittelabschnitt bezeichneten Mittenbereich 6 miteinander verbunden. Hierbei ist das untere Rahmenteil 5 zum Auswechseln der Scheiben 3 relativ zum oberen Rahmenteil 4 verschiebbar. Es ist insbesondere in einer senkrecht zu einer Transversalrichtung 28 verlaufenden Longitudinalrichtung 29 relativ zum oberen Rahmenteil 4 aus einer eingeschobenen Endposition in eine ausgezogene Endposition verschiebbar.

Zur Sicherung des unteren Rahmenteils 5 in der eingeschobenen Endposition sind zwei miteinander zusammenwirkende Magnete 30, 31 vorgesehen. Der Magnet 30 ist mit dem oberen Rahmenteil 4 verbunden. Er ist insbesondere in das oberen Rahmenteil 4 integriert. Er ist formschlüssig in eine Aussparung 32 im oberen Rahmenteil 4 angeordnet. Er kann in der Aussparung 32 verklebt sein. Die Aussparung 32 ist hohlzylindrisch, insbesondere als zylinderförmige Bohrung ausgebildet.

Der Magnet 31 ist mit dem unteren Rahmenteil 5 verbunden. Der Magnet 31 ist insbesondere in das untere Rahmenteil 5 integriert. Er ist vorzugsweise formschlüssig in eine Aussparung, insbesondere eine zylindrische Bohrung oder ein zylindrisches Sackloch im unteren Rahmenteil 5 integriert. Er kann mit dem unteren Rahmenteil 5 verklebt sein.

Die Magnete 30, 31 sind derart in den Rahmenteilen 4, 5 angeordnet, dass sie in der eingeschobenen Endposition benachbart, insbesondere koaxial zueinander sind. Die Magnete 30, 31 sind hierbei in Sagitalrichtung 34 gegeneinander versetzt angeordnet.

Die Magnete 30, 31 sind insbesondere zylinderförmig ausgebildet. Sie weisen einen Durchmesser von etwa 4 mm und eine Höhe von etwa 1,5 mm auf. Allgemein liegt der Durchmesser der Magnete 30, 31 im Bereich von 2 mm bis 1 cm, insbesondere im Bereich von 3 mm bis 5 mm. Die Höhe der Magnete 30, 31 liegt insbesondere im Bereich von 1 mm bis 3 mm. Die Magnete 30, 31 können auch quaderförmig ausgebildet sein.

Die Magnete 30, 31 sind derart angeordnet, dass der eine Pol des Magneten 30 dem hierzu entgegengesetzten Pol des Magneten 31 zugewandt ist. Sie sind somit insbesondere derart angeordnet, dass sie eine anziehende Kraft aufeinander ausüben.

Allgemein bilden die Magnete 30, 31 miteinander zusammenwirkende ferromagnetische Elemente 12. Die miteinander zusammenwirkenden ferromagnetischen Elemente 12 können jeweils beide als Magnete ausgebildet sein. Es ist auch möglich, lediglich eines der ferromagnetischen Elemente 12 als Magnet und das mit diesem zusammenwirkende Element 12 aus einem magnetisierbaren Material auszubilden.

Mittels der ferromagnetischen Elemente 12 ist eine Haltekraft von mindestens 1 N, insbesondere mindestens 5 N, insbesondere mindestens 10 N, erzeugbar.

Außerdem ist zur Sicherung des unteren Rahmenteils 5 in der ausgezogenen Endposition ein weiterer Magnet 33 mit dem unteren Rahmenteil 5 verbunden. Der Magnet 33 ist in Longitudinalrichtung 29 versetzt zum Magneten 31 angeordnet. Im Übrigen entspricht die Ausbildung und Anordnung des Magneten 33 der des Magneten 31. Der Magnet 33 ist insbesondere oberhalb des Magneten 31 angeordnet. Er ist derart angeordnet, dass er in der ausgezogenen Endposition des unteren Rahmenteils 5 benachbart, insbesondere koaxial, zum Magneten 30 im oberen Rahmenteil 4 angeordnet ist. Die Magnete 30, 33 sind hierbei in Sagitalrichtung 34 gegeneinander versetzt.

Zur Stabilisierung der Rahmenteile 4, 5 gegeneinander sind diese im Mittenbereich 6, in welchem sie miteinander zusammenwirkend ineinander eingreifen, profiliert ausgebildet. Das untere Rahmenteil 5 umfasst insbesondere eine Führungszunge 35, welche sich in Longitudinalrichtung 29 erstreckt. Die Führungszunge 35 ist seitlich von Führungsstegen 36 des oberen Rahmenteils 4 geführt. Sie greift im eingeschobenen Zustand des unteren Rahmenteils 5 in einen Führungsschlitz 37 im oberen Rahmenteil 4 ein. Sie liegt hierbei an einer vorderen Führungswand 38 und an einer hinteren Führungswand 39 an. Hierdurch ist das untere Rahmenteil 5 besonders sicher und präzise im oberen Rahmenteil 4 geführt. Es weist insbesondere genau einen Freiheitsgrad auf, d. h. es ist ausschließlich in Longitudinalrichtung linear verschiebbar.

Zur Sicherung des unteren Rahmenteils 5 kann dieses mittels einer mechanischen Sperre 40 gesichert mit dem oberen Rahmenteil 4 verbunden sein. Die mechanische Sperre 40 kann als Vorsprung, insbesondere als Rastnase, ausgebildet sein. Sie kann hierbei mit einer dazu passend ausgebildeten Aussparung 41 im oberen Rahmenteil 4 zusammenwirken. Die Sperre 40 bildet allgemein ein mechanisches Sicherungs-Element. Die Sperre 40 kann lösbar sein. In diesem Fall ist das untere Rahmenteil 5 auswechselbar. Sie kann auch fix sein. In diesem Fall ist das untere Rahmenteil 5 unlösbar mit dem oberen Rahmenteil 4 verbunden. Das untere Rahmenteil kann als Mittelsteg 42 der Brille 1 ausgebildet sein. Es kann insbesondere Nasenauflagen 25 umfassen. Diese können fest oder abnehmbar mit dem unteren Rahmenteil 5 verbunden sein.

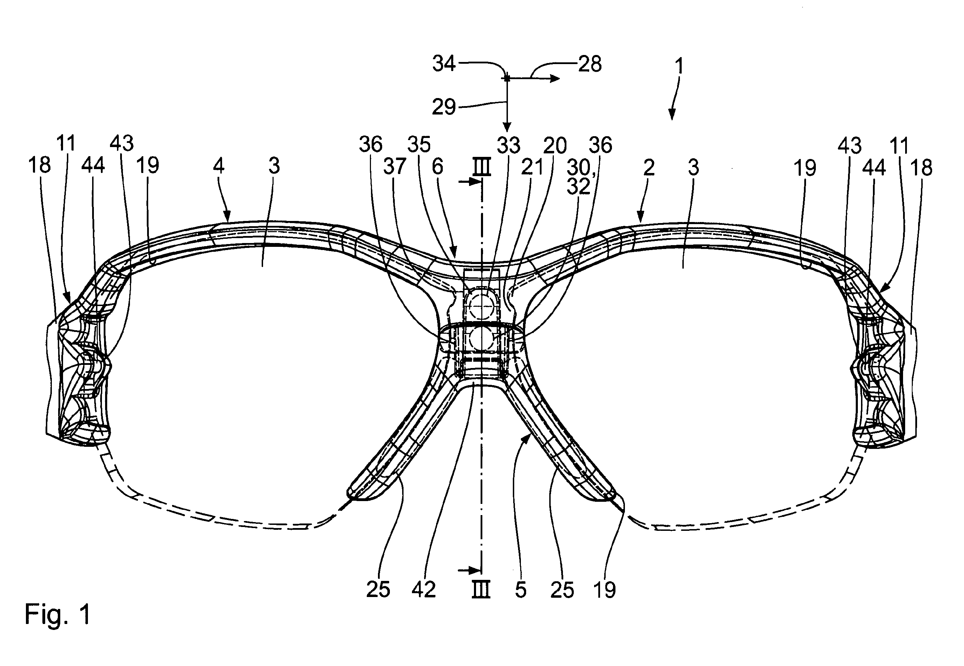

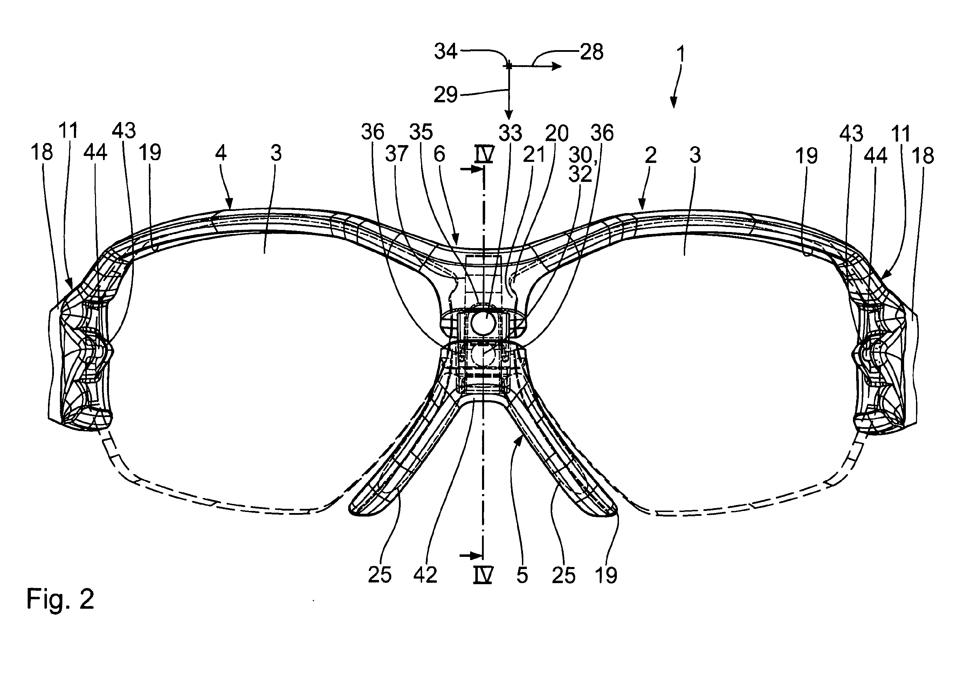

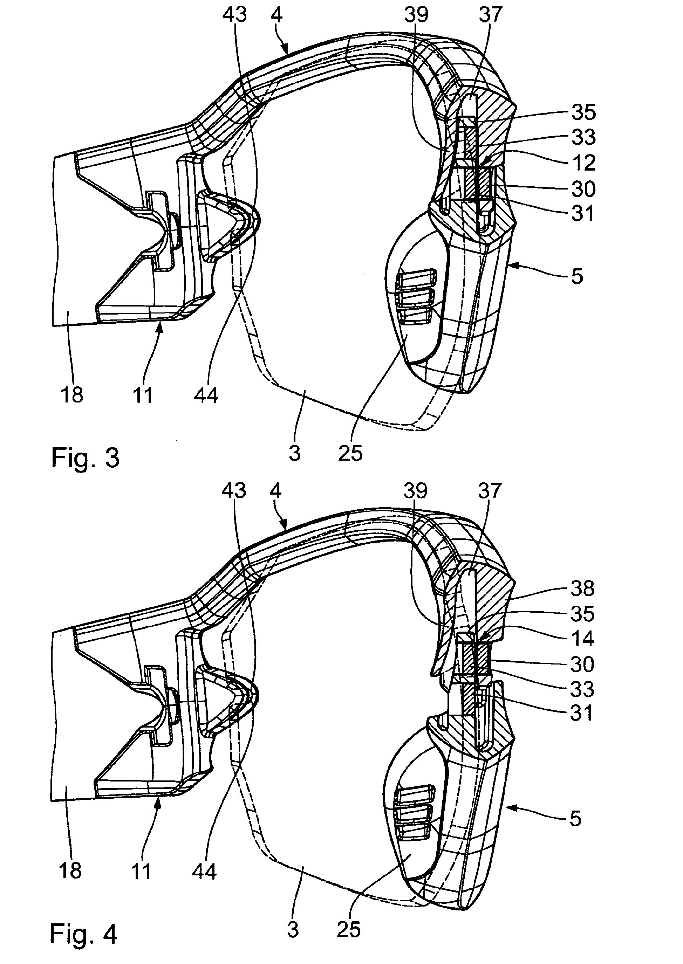

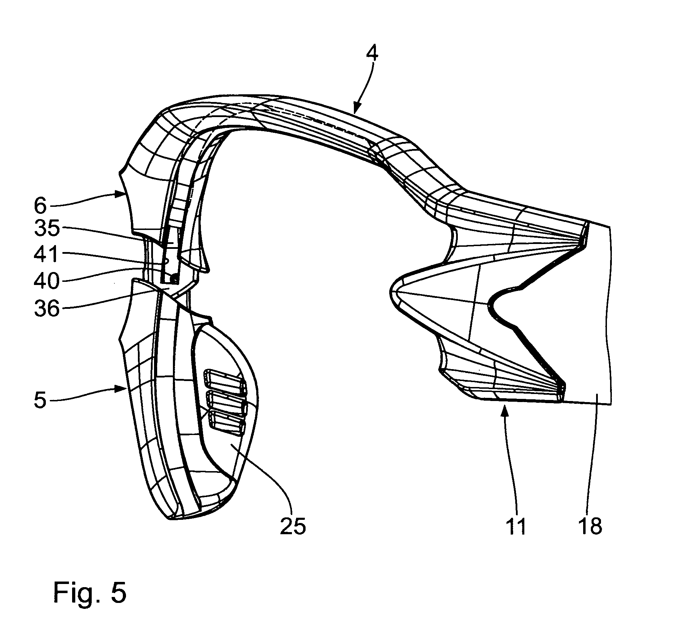

Bei der in den Figuren 1 bis 5 dargestellten Ausführungsform umgreift der Rahmen 2 auch in der eingeschobenen Endposition des unteren Rahmenteils 5 die Scheiben 3 lediglich teilweise. Er liegt umfangseitig lediglich zu etwa 55 % am Umfang der Scheiben 3 an. Allgemein liegt der Rahmen 2 umfangsseitig zu 40 % bis 100 %, insbesondere 45 % bis 80 %, insbesondere 50 % bis 70 % an den Scheiben 3 an. Das untere Rahmenteil 5 liegt hierbei über eine Länge von höchstens 10 cm, insbesondere höchstens 7 cm, insbesondere höchstens 4 cm an der Scheibe 3 an.

In einer nicht in den Figuren dargestellten Ausführungsform ist das untere Rahmenteil 5 auswechselbar. Zur verrastbaren Verbindung der Rahmenteile 4, 5 im Bereich des Mittelabschnitts 6 weist das untere Rahmenteil 5 an seiner Führungszunge 35 eine Rastnase auf. Die Rastnase ist an eine Einrastöffnung im oberen Rahmenteil 4 angepasst ausgebildet. Die Führungszunge 35 ist in Sagittalrichtung 34 leicht flexibel ausgebildet, um ein Verrasten der Rastnase in der Einrastöffnung zu ermöglichen.

Die Rahmenteile 4, 5 weisen jeweils eine nutartige Vertiefung 19 auf, in welche die Scheibe 3 einsetzbar ist. Die Scheibe 3 ist insbesondere formschlüssig in die Vertiefung 19 einsetzbar. Allgemein ausgedrückt, bildet die Vertiefung 19 eine Führungsausnehmung zur zumindest abschnittsweisen Aufnahme eines Randbereichs der Scheibe 3. Die Vertiefung 19 hat eine Tiefe im Bereich von 1 bis 3 mm. Sie ist derart ausgebildet, dass die Vertiefung 19 im zweiten Rahmenteil 5 eine Fortsetzung, insbesondere eine stufenlose Fortsetzung, der Vertiefung 19 im ersten Rahmenteil 4 bildet.

Der Randbereich der Scheibe 3 weist eine Rastnase 20 auf, welche mit einer dazu passenden Hinterschneidung 21 im oberen Rahmenteil 4 zur Fixierung der Scheibe 3 im Rahmen 2 zusammenwirkt. Die Rastnase 20 und die Hinterschneidung 21 sind insbesondre im Mittelabschnitt 6 der Brille 1 angeordnet. Durch das Zusammenwirken der Rastnase 20 mit der Hinterschneidung 21 wird der sichere Sitz der Scheibe 3 im Rahmen 2 verbessert.

Die Scheiben 3 weisen im lateralen Randbereich jeweils eine Einkerbung 43 auf, welche mit einem dazu passenden Vorsprung 44 am oberen Rahmenteil 4 zur Fixierung der Scheibe 3 im Rahmen 2 zusammenwirkt.

Zur Erleichterung des Auswechselns der Scheiben 3 ist der obere Rahmenteil 4 zumindest abschnittsweise flexibel ausgebildet. Er weist insbesondere mindestens einen flexibel ausgebildeten Abschnitt auf.

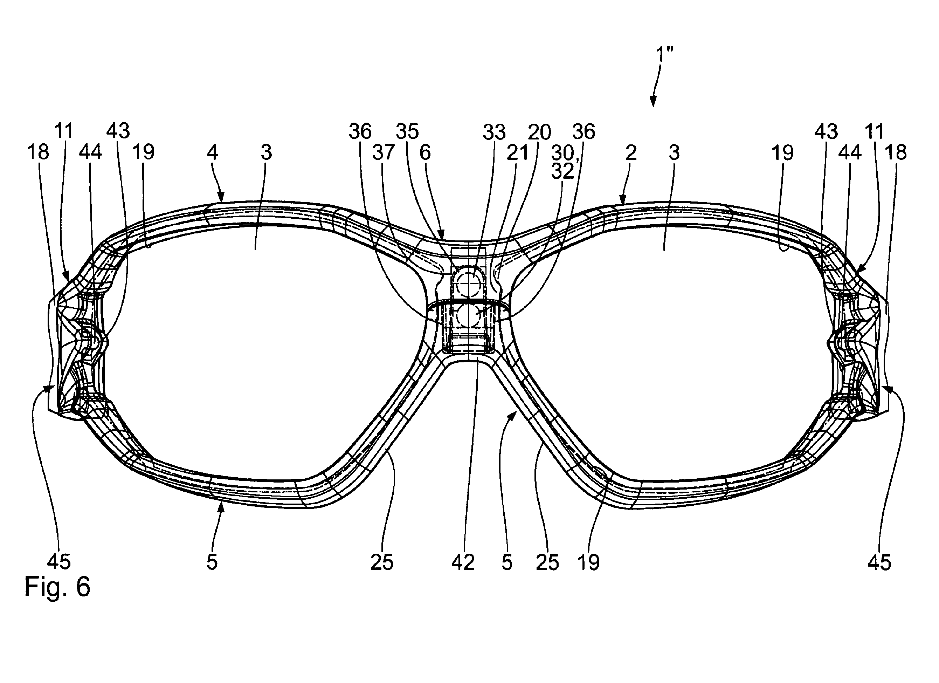

Gemäß einer weiteren, in Figur 6 dargestellten Ausführungsform ist das untere Rahmenteil 5 sowohl im Mittenbereich 6 als auch in lateralen Seitenbereichen 11 mit dem oberen Rahmenteil 4 verbunden. Der Rahmen 2 umgibt somit die Scheiben 3 vollständig. Es handelt sich um einen sogenannten Vollrahmen. Bei dieser Ausführungsform ist im lateralen Seitenbereich 11 eine lösbare Verbindung 45 zwischen den Rahmenteilen 4, 5 vorgesehen. Die lösbare Verbindung 45 kann als Magnet- und/oder Rastverbindung ausgebildet sein. Durch den umlaufenden Rahmen 2 werden die Scheiben 3 besonders sicher gehalten. Im Übrigen sei auf die Beschreibung des vorhergehenden Ausführungsbeispiels verwiesen.

In einer weiteren, alternativen Ausführungsform sind die Rahmenteile 4, 5 in den lateralen Seitenbereichen 11 fix miteinander verbunden. Sie sind somit zusammenhängend ausgebildet. Bei dieser Ausführungsform ist das untere Rahmenteil 5 insbesondere aus einem flexiblen Material. Hierdurch wird sichergestellt, dass das untere Rahmenteil 5 trotz der Verbindung mit dem oberen Rahmenteil 4 in den Seitenbereichen 11 im Mittenbereich 6 relativ zum oberen Rahmenteil 4 in eine ausgezogene Endposition verschiebbar ist. Die Verschiebbarkeit des unteren Rahmenteils 5 kann hierbei durch ein oder mehrere Gelenkelemente im unteren Rahmenteil 5 verbessert werden.

Gemäß einer weiteren, nicht in den Figuren dargestellten Ausführungsform, sind die Magnete 30 und/oder 31 und/oder 33 vollständig in das jeweilige Rahmenteil 4, 5 integriert. Sie sind insbesondere vom Material des jeweiligen Rahmenteils 4, 5 vollständig umgeben. Sie sind somit besonders sicher gegen ein unbeabsichtigtes Herausfallen gesichert.

Gemäß einer weiteren Ausführungsform können die Magnete 30 und/oder 31 und/oder 33 auch schraubenartig ausgebildet sein. Sie können insbesondere ein Außengewinde aufweisen. Sie können insbesondere in ein dazu passendes Innengewinde im jeweiligen Rahmenteil 4, 5 eingeschraubt sein.

## Patentansprüche

1. Brille (1) umfassend
a. wenigstens eine Scheibe (3) und
b. einen sich in einer Transversalrichtung (28) erstreckenden Rahmen (2) mit
i. einem oberen Rahmenteil (4) und
ii. einem unteren Rahmenteil (5),
c. wobei das untere Rahmenteil (5) zumindest in einem Mittenbereich (6) mit dem oberen Rahmenteil (4) verbunden ist,
d. wobei die mindestens eine Scheibe (3) auswechselbar ist, und
e. wobei das untere Rahmenteil (5) zum Auswechseln der mindestens einen Scheibe (3) relativ zum oberen Rahmenteil (4) aus einer eingeschobenen Endposition in einer senkrecht zur Transversalrichtung (28) verlaufenden Longitudinalrichtung (29) in eine ausgezogene Endposition verschiebbar ist,
f. **dadurch gekennzeichnet, dass** zur Sicherung des unteren Rahmenteils (5) in der ausgezogenen Endposition mindestens ein mit dem unteren Rahmenteil (5) verbundenes ferromagnetisches Sicherungsmittel (33) vorgesehen ist, welches mit mindestens einem mit dem oberen Rahmenteil (4) verbundenen ferromagnetischen Sicherungsmittel (30) zusammenwirkt.

2. Brille (1) gemäß Anspruch 1, **dadurch gekennzeichnet, dass** zur Sicherung des unteren Rahmenteils (5) in der eingeschobenen Endposition mindestens ein mit dem unteren Rahmenteil (5) verbundenes ferromagnetisches Sicherungsmittel (31) vorgesehen ist, welches mit mindestens einem mit dem oberen Rahmenteil (4) verbundenen ferromagnetischen Sicherungsmittel (30) zusammenwirkt.

3. Brille (1) gemäß einem der Ansprüche 1 oder 2, **dadurch gekennzeichnet, dass** die ferromagnetischen Sicherungsmittel (30, 31, 33) jeweils formschlüssig in Aussparungen (32) in den Rahmenteilen (4, 5) integriert sind.

4. Brille (1) gemäß einem der vorhergehenden Ansprüche, **dadurch gekennzeichnet, dass** mindestens zwei ferromagnetische Sicherungsmittel (31, 33) im unteren Rahmenteil (5) integriert sind.

5. Brille (1) gemäß Anspruch 4, **dadurch gekennzeichnet, dass** die ferromagnetischen Sicherungsmittel (31, 33) im unteren Rahmenteil (5) in Longitudinalrichtung (29) gegeneinander versetzt angeordnet sind.

6. Brille (1) gemäß einem der vorhergehenden Ansprüche, **dadurch gekennzeichnet, dass** das untere Rahmenteil (5) mittels eines mechanischen Sicherungs-Elements (40) gesichert mit dem oberen Rahmenteil (4) verbunden ist.

7. Brille (1) gemäß Anspruch 6, **dadurch gekennzeichnet, dass** das mechanische Sicherungs-Element (40) lösbar ist.

8. Brille (1) gemäß einem der Ansprüche 1 bis 6, **dadurch gekennzeichnet, dass** das untere Rahmenteil (5) unlösbar mit dem oberen Rahmenteil (4) verbunden ist.

9. Brille (1) gemäß einem der vorhergehenden Ansprüche, **dadurch gekennzeichnet, dass** das untere Rahmenteil (5) als Mittelsteg (42) ausgebildet ist.

10. Brille (1) gemäß einem der vorhergehenden Ansprüche, **dadurch gekennzeichnet, dass** der Rahmen (2) auch in der eingeschobenen Endposition des unteren Rahmenteils (5) die mindestens eine Scheibe (3) lediglich teilweise umgreift.

11. Brille (1) gemäß einem der vorhergehenden Ansprüche, **dadurch gekennzeichnet, dass** das obere Rahmenteil (4) und/oder das untere Rahmenteil (5) mindestens einen flexibel ausgebildeten Abschnitt aufweist.

12. Brille (1) gemäß Anspruch 11, **dadurch gekennzeichnet, dass** das obere Rahmenteil (4) mindestens eine nutartige Vertiefung (19) aufweist, in welche die Scheibe (B) einsetzbar ist.

13. Brille (1) gemäß Anspruch 12, **dadurch gekennzeichnet, dass** die Scheibe (3) in einem Randbereich mindestens eine Rastnase (20) aufweist, welche mit einer dazu passenden Hinterschneidung (21) im oberen Rahmenteil (4) zur Fixierung der Scheibe (3) im Rahmen (2) zusammenwirkt.

14. Brille (1) gemäß einem der vorhergehenden Ansprüche, **dadurch gekennzeichnet, dass** mindestens eines der Rahmenteile (4,5) aus Kunststoff ist.

## Claims

1. Spectacles (1) comprising
a. at least one lens (3) and
b. at least one frame (2) extending in a transverse direction (28), the frame comprising
i. an upper frame part (4) and
ii. a lower frame part (5),
c. wherein the lower frame part (5) is connected to the upper frame part (4) at least in a central area (6),
d. wherein the at least one lens (3) is exchangeable, and
e. wherein in order to exchange the at least one lens (3), the lower frame part (5) is displaceable from an inserted end position to an extended end position in a longitudinal direction (29) which is perpendicular to the transverse direction (28),
f. **characterized in that** in order to secure the lower frame part (5) in the extended end position, at least one ferromagnetic securing means (33) is provided which is connected to the lower frame part (5) and interacts with at least one ferromagnetic securing means (30) connected to the upper frame part (4).

2. Spectacles (1) according to claim 1, **characterized in that** in order to secure the lower frame part (5) in the inserted end position, at least one ferromagnetic securing means (31) is provided which is connected to the lower frame part (5) and interacts with at least one ferromagnetic securing means (30) connected to the upper frame part (4).

3. Spectacles (1) according to one of claims 1 or 2, **characterized in that** the ferromagnetic securing means (30, 31, 33) are in each case integrated into recesses (32) in the frame parts (4, 5) in a form-fit way.

4. Spectacles (1) according to one of the above claims, **characterized in that** at least two ferromagnetic securing means (31, 33) are integrated into the lower frame part (5).

5. Spectacles (1) according to claim 4, **characterized in that** the ferromagnetic securing means (31, 33) in the lower frame part (5) are staggered relative to each other in the longitudinal direction (29)

6. Spectacles (1) according to one of the above claims, **characterized in that** the lower frame part (5) is securely connected to the upper frame part (4) by means of a mechanical securing element (40).

7. Spectacles (1) according to claim 6, **characterized in that** the mechanical securing element (40) is releasable.

8. Spectacles (1) according to one of claims 1 to 6, **characterized in that** the lower frame part (5) is non-releasably connected to the upper frame part (4).

9. Spectacles (1) according to one of the above claims, **characterized in that** the lower frame part (5) is configured as a central nose saddle (42).

10. Spectacles (1) according to one of the above claims, **characterized in that** the frame (2) encompasses the at least one lens (3) only partly even when the lower frame part (5) is in the inserted end position.

11. Spectacles (1) according to one of the above claims, **characterized in that** the upper frame part (4) and/or the lower frame part (5) have at least one flexible portion.

12. Spectacles (1) according to claim 11, **characterized in that** the upper frame part (4) has at least one groove-like recess (19) into which the lens (3) is insertable.

13. Spectacles (1) according to claim 12, **characterized in that** an edge area of the lens (3) is provided with at least one snap-in protrusion (20) which interacts with a corresponding recess (21) in the upper frame part (4) for securing the lens (3) in the frame (2).

14. Spectacles (1) according to one of the above claims, **characterized in that** at least one of the frame parts (4, 5) is made of plastics.

## Revendications

1. Lunettes (1) comprenant
a. au moins un verre (3) et
b. une monture (2), s'étendant dans la direction transversale (28), comportant
i. une partie de monture supérieure (4) et
ii. une partie de monture inférieure (5),
c. la partie de monture inférieure (5) étant reliée avec la partie de monture supérieure (4) au moins dans une zone centrale (6),
d. au moins un verre (3) pouvant être échangé, et
e. la partie de monture inférieure (5), pouvant être déplacée par rapport à la partie de monture supérieure (4) à partir d'une position finale insérée vers une position finale débrayée dans une direction longitudinale (29), s'étendant perpendiculairement par rapport à la direction transversale (28), pour l'échange d'au moins un verre (3),
f. **caractérisées en ce qu'**au moins un système de sécurisation (33) ferromagnétique relié avec la partie de monture inférieure (5) est prévu dans la position finale débrayée pour la sécurisation de la partie de monture inférieure (5), système qui agit conjointement avec au moins un système de sécurisation (30) ferromagnétique relié avec la partie de monture supérieure (4).

2. Lunettes (1) selon la revendication 1, **caractérisées en ce qu'**au moins un système de sécurisation (31) ferromagnétique relié avec la partie de monture inférieure (5) est prévu pour la sécurisation de la partie de monture inférieure (5) dans la position finale insérée, système qui agit conjointement avec au moins un système de sécurisation (30) ferromagnétique relié avec la partie de monture supérieure (4).

3. Lunettes (1) selon l'une des revendications 1 ou 2, **caractérisées en ce que** les systèmes de sécurisation (30, 31, 33) ferromagnétiques sont chacun intégrés par complémentarité de formes dans des évidements (32) dans les parties de monture (4, 5).

4. Lunettes (1) selon l'une des revendications précédentes, **caractérisées en ce qu'**au moins deux systèmes de sécurisation (31, 33) ferromagnétiques sont intégrés dans la partie de monture inférieure (5).

5. Lunettes (1) selon la revendication 4, **caractérisées en ce que** les systèmes de sécurisation (31, 33) ferromagnétiques sont disposés, espacés, opposés l'un par rapport à l'autre, dans la direction longitudinale (29), dans la partie de monture inférieure (5).

6. Lunettes (1) selon l'une des revendications précédentes, **caractérisées en ce que** la partie de monture inférieure (5) est reliée avec la partie de monture supérieure (4) de manière sécurisée au moyen d'un élément de sécurisation mécanique (40).

7. Lunettes (1) selon la revendication 6, **caractérisées en ce que** l'élément de sécurisation mécanique (40) peut être détaché.

8. Lunettes (1) selon l'une des revendications précédentes, **caractérisées en ce que** la partie de monture inférieure (5) est reliée de manière non détachable avec la partie de monture supérieure (4).

9. Lunettes (1) selon l'une des revendications précédentes, **caractérisées en ce que** la partie de monture inférieure (5) est conçue sous la forme d'un montant central (42).

10. Lunettes (1) selon l'une des revendications précédentes, **caractérisées en ce que** la monture (2) entoure également, purement et simplement, partiellement, au moins un verre (3) dans la position finale insérée de la partie de monture inférieure (5).

11. Lunettes (1) selon l'une des revendications précédentes, **caractérisées en ce que** la partie de monture supérieure (4) et/ou la partie de monture inférieure (5) présentent au moins une portion conçue flexible.

12. Lunettes (1) selon la revendication 11, **caractérisées en ce que** la partie de monture supérieure (4) présente au moins une cavité (19) en forme de rainure dans laquelle le verre (3) peut être inséré.

13. Lunettes (1) selon la revendication 12, **caractérisées en ce que** le verre (3) présente au moins une saillie (20) en butée dans une zone du bord qui agit conjointement avec une fixation de retenue (21), qui lui est complémentaire, dans la partie de monture supérieure (4) pour la fixation du verre (3) dans la monture (2).

14. Lunettes (1) selon l'une des revendications précédentes, **caractérisées en ce qu'**au moins une des parties de monture (4, 5) est en matière plastique.
